# EUROPEAN PATENT APPLICATION

(11) **EP 0 980 789 A1**
(43) Date of publication of application: **23.02.2000**
(21) Application number: 99115690.2
(22) Date of filing: 09.08.1999
(51) Int. Cl.: B60R 7/04

(54) **Vehicle seat assembly with underseat cargo management system**

(30) Priority: 18.08.1998 US 136100
(71) Applicant: Johnson Controls Technology Company, Plymouth, Michigan 48170 (US)
(72) Inventor: Demick, Robert L., Eastpointe, Michigan 48021 (US); Laskowski, Micheal, Livonia, Michigan 48154 (US)
(74) Representative: Patentanwälte Dr. Solf & Zapf

(57) **Abstract**

A vehicle seat assembly (10) in which the seat cushion (12) is movable from a generally horizontal passenger use position to a storage position providing access to the area beneath the seat cushion. A platform is provided beneath the seat cushion for storing cargo, such as grocery bags (34) and loose items typically purchased at a grocery store. These items can be safely and conveniently stored on the platform for transportation from the store without shifting or moving of the cargo within the vehicle. The cargo support platform can be provided in the form of a cargo management device (64) having folding walls that can be raised to segment the platform into smaller portions and for retaining the cargo thereon.

## Description

### BACKGROUND AND SUMMARY OF THE INVENTION

The present invention relates to a versatile vehicle seat assembly and inpaticular to a seat assembly having cargo storage capabilities beneath the seat cushion.

Motor vehicle manufacturers are becoming increasingly aware of the many uses of passenger cars other than carrying passengers. Some studies have indicated that a rear seat in a motor vehicle is used more often for carrying cargo than it is for carrying passengers. Accordingly, there is a need for versatility that allows a rear vehicle seat to not only be used to safely and comfortably carry passengers, but also to safely and conveniently carry cargo.

The vehicle seat assembly of the present invention provides a rear seat, particularly a passenger sedan seat, in which the lower seat cushion can be moved from its generally horizontal passenger use position, to a storage position. When moved to the storage position, access is gained to the area beneath the seat cushions passenger use position. The area beneath the seat cushion is provided with structure for conveniently and safely carrying cargo, such as grocery bags, produce bags and other large items such as milk jugs and beverage bottles that are not placed in a grocery bag. Other types of cargo can be carried as well. However, there is a need for a convenient means to carry grocery bags in a vehicle in a manner in which tipping of the bags is prevented.

The cargo carrying provisions beneath the seat cushion may be as simple as a flat surface to rest these items upon or maybe a more elaborate cargo management device that can be unfolded to provide vertical walls to retain a grocery bag in place and prevent it from shifting about the vehicle during driving.

In a preferred embodiment of the invention, the seat cushion may have three portions, two outboard portions and a center portion which may be separately moved to stored positions to provide varying amounts of cargo carrying capacity. For example, the left outboard seat cushion portion may be moved for carrying two grocery bags, leaving the center portion and the right outboard portion available for carrying a passenger if desired. If room for a third grocery bag is required, the center portion can be moved to a storage position as well. If that is not sufficient cargo space, both outboard portions and the center portion can be moved to storage positions.

The seat cushion can also include a row of hooks on the bottom side which open upwardly when the seat cushion is in its stored position. These hooks enable plastic grocery bag handles, as well as the handles from produce bags, to be placed thereon for retaining the bags during transportation.

The seat cushion is also shaped in such a manner that when it is in its stored position, the underside of the seat cushion forms a horizontal support ledge. This support ledge is used to support the forward/upper end of the seat back when the seat back is folded down to form an opening pass-through into the trunk area of the vehicle. This increases the load carrying capacity of the seat back since the end of the seat back is directly supported by this ledge.

It is an advantage of the present invention to utilize the space within a motor vehicle beneath a rear seat cushion. This enables a cargo storage and management system to be included in the vehicle without signifcant change to conventional seat cushions or to the comfort provided by the seat assembly for passengers.

Further objects, features and advantages of the invention will become apparent from a consideration of the following description and the appended claims when taken in connection with the accompanying drawings.

### BRIEF DESCRIPTION OF THE DRAWINGS

FIG. 1 is a perspective view of the vehicle seat assembly of the present invention shown in a passenger use position;
FIG. 2 is a perspective view of the seat assembly of FIG. 1 illustrating one portion of the seat cushion moved to a storage position enabling cargo to be placed in the area previously occupied by the seat cushion in its passenger use position;
FIG. 3 is a perspective view illustrating all three portions of the seat cushion moved to a storage position;
FIG. 4 is a perspective view showing the seat cushion moved to its storage position and the seat back rotated downward to generally horizontal postions forming a pass-through to the vehicle trunk;
FIG. 5 is a side elevation view of the seat assembly installed in a passenger car showing the seat cushion in its use and storage positions;
FIG. 6 is a side elevation view of FIG. 5 with the seat cushion and the seat back in their respective storage positions;
FIG. 7 is a perspective view of the cargo management device used to support cargo beneath the seat cushion; and
FIG. 8 is an end view of the cargo management device of FIG. 7.

### DETAILED DESCRIPTION OF THE PREFERRED EMBODIMENT

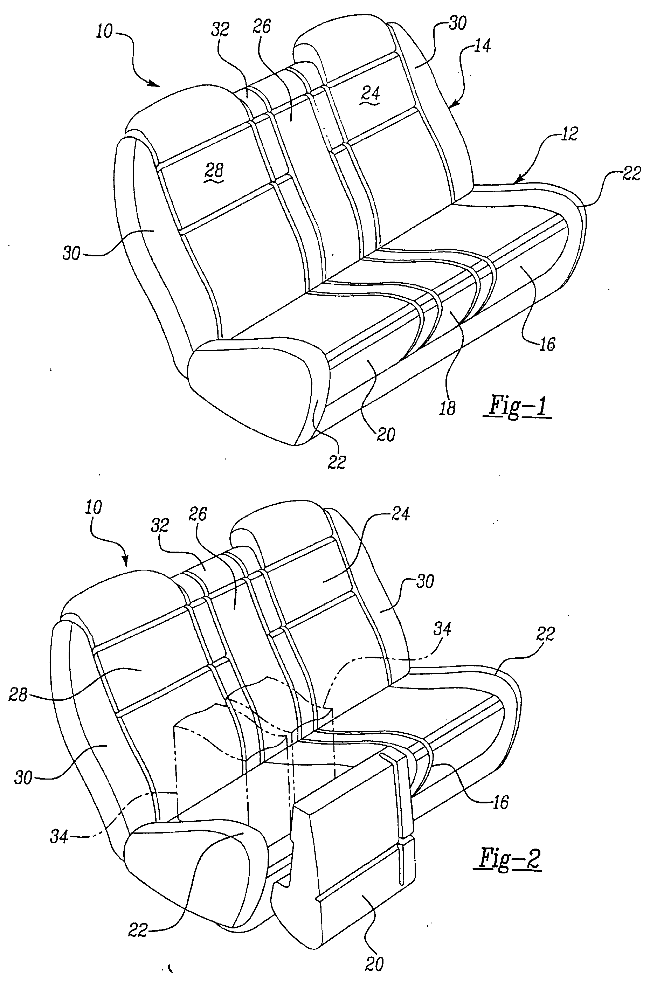

The seat assembly of the present invention is shown in FIG. 1 and designated generally at 10. Seat assembly 10 is shown as a rear bench seat for a passenger sedan type of motor vehicle. The seat assembly 10 includes a lower, generally horizontal, seat cushion 12 and a seat back 14 extending upwardly at the rear of the seat cushion. The seat cushion is divided into three portions, a left portion 16, a central portion 18 and a right portion 20. The left and right portions of the seat cushion will typically be larger than the center section. The seat cushion also includes fixed left and right side bolsters 22 on the left and right outboard sides of the seat cushion.

The seat back 14 likewise has a left portion 24, a center portion 26 and a right portion 28. The seat back further includes fixed left and right side bolsters 30 on the left and right outboard sides of the seat back. A collar 32 is attached to the vehicle rear package shelf 33 at the upper end of the seat back portions 24, 26 and 28.

With reference to FIG. 2, the right portion 20 of the seat cushion has been rotated forwardly and upwardly from its generally horizontal passenger use position to a generally upright storage position. In the storage position, the seat bottom portion 20 extends generally vertically in the area immediately behind the seat back of a vehicle front seat (not shown). With the seat cushion portion moved to its storage position, access is provided to the area beneath the seat cushion. Cargo, such as grocery bags 34, can be placed in this area previously occupied by the seat cushion. The grocery bags 34 are placed on a horizontal support 36 beneath the seat cushion. In one embodiment as disclosed below, the horizontal support 36 is provided by a cargo management device that includes folding walls that can be folded to a relatively compact flat package beneath the seat cushion. The walls can be unfolded to vertical positions to contain the grocery bags 34.

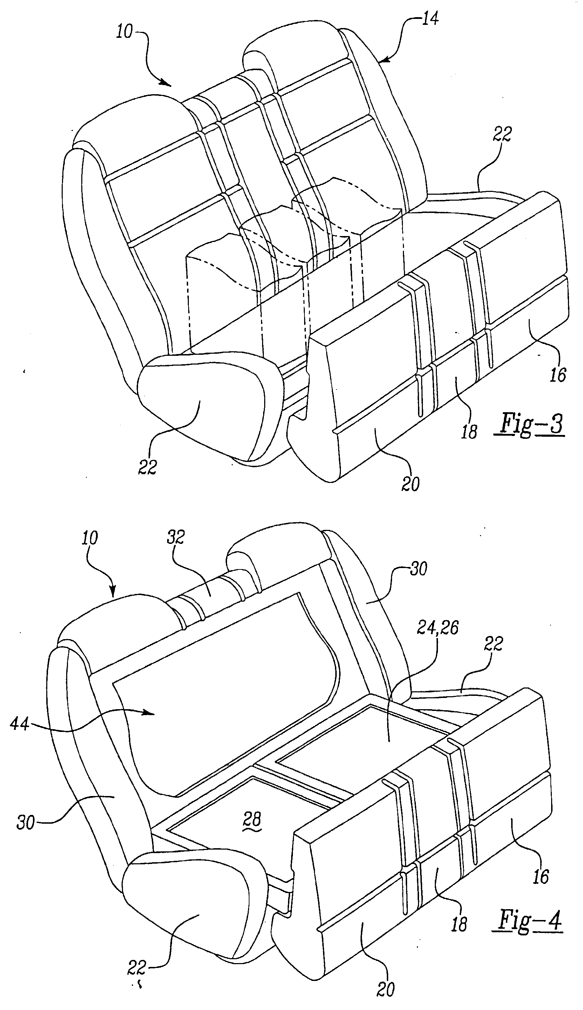

With reference to FIG. 3, the right portion 20, left portion 16 and center portion 18 of the seat cushion have all been moved to storage positions to provide additional room for grocery bags 34.

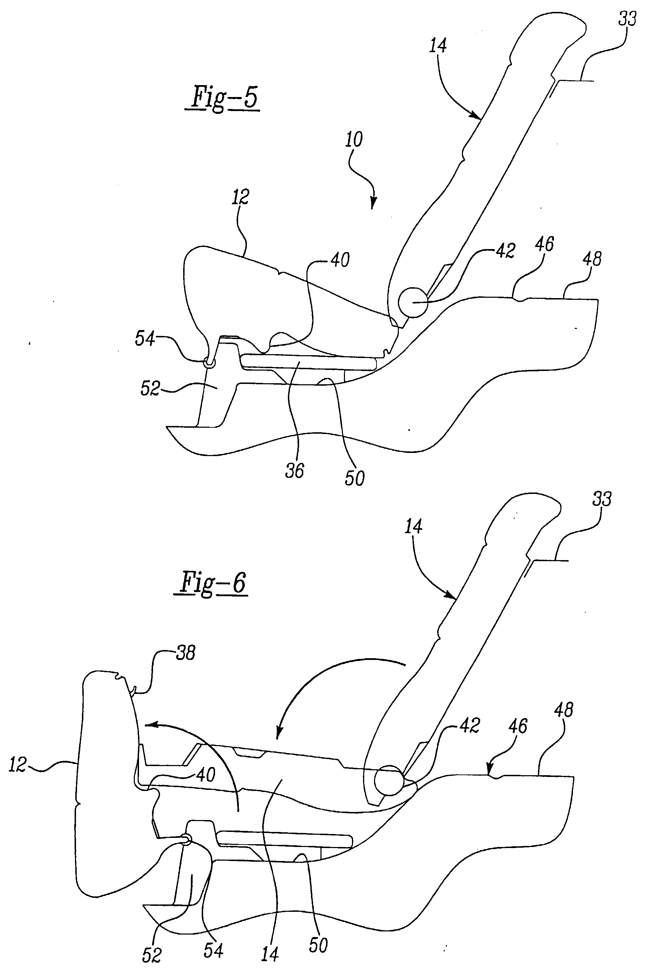

The seat cushion has a plurality of hooks 38 on the bottom side near the rear end. When the seat cushion portions are moved to the storage position as shown in FIG. 5, the hooks open upwardly. The hooks are provided to receive the handles of plastic grocery bags or the handles of other produce bags, enabling the bags to be retained within the vehicle to prevent moving or shifting of the bags during transportation.

The lower side of the seat cushion portions are contoured to form a ledge 40. When the seat cushion portions are in the storage position, the ledge 40 provides a support surface for the upper end of the seat back portions. The seat back portions, as shown in FIG. 6, are mounted to a pivot 42. This enables the seat back portions to rotate from their upright passenger use position shown in FIG. 5 to a generally horizontal storage position shown in FIG. 6. This reveals an opening 44 behind the seat back into the trunk area of the motor vehicle. When the seat back has been lowered to its storage position, large cargo items can be placed in the vehicle trunk which extend into the rear seat area and are supported by the seat back. With the ledge 40 in the seat cushion, the upper end of the seat back is provided with direct support enabling heavy objects to be carried thereon without the need for the seat back pivot mechanism to have a stop.

With reference to FIGS. 5 and 6, the seat assembly 10 is shown installed in a motor vehicle. The motor vehicle includes a floor pan 46 which has a raised trunk portion 48 extending over the vehicle rear wheels and a downward sloping portion to a lower rear seat supporting area 50. The vehicle seat assembly 10 is attached to a stanchion 52 mounted to the vehicle floor. The stanchion can be provided as part of the seat assembly. The seat cushion 12 is pivotally attached to the stanchion at a pivot 54 so that the seat cushion can be rotated forward about the pivot 54 from its generally horizontal passenger use position to a generally vertical storage position.

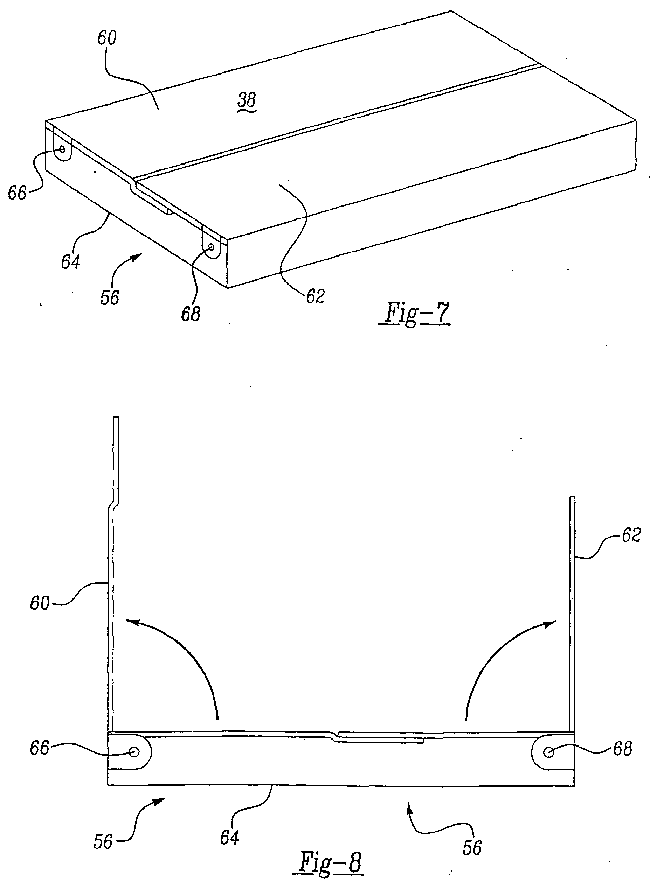

The horizontal support 36 lies above the vehicle floor pan portion 50 and beneath the seat cushion 12 when in its passenger use position. The horizontal support 36 can be a metal or plastic pan attached to the vehicle body beneath the seat cushion. Alternatively, the horizontal support can be a cargo management device 56 shown in greater detail in connection with FIG. 7. The cargo management device 56 has a generally flat upper surface 58 which can be used to place cargo thereon. Alternatively, the upper surface 58 is formed by a pair of rotating cover members 60 and 62. The cover members are pivotally attached to a base pan 64 to rotate about pivots 66 and 68 respectively. The covers 60 and 62 can be raised to vertical positions as shown in FIG. 7 to form retaining walls for cargo supported on the base pan 64 and keep the cargo from shifting about the vehicle. Multiple cargo management devices 56 can be placed in the vehicle across the seat beneath the individual seat cushion portions 16, 18 and 20. Alternatively, the single base pan 64 can extend across the seat with additional covers 60 and 62 attached thereto which can be rotated upward to form vertical walls. In addition, the cargo management device can have end wall sections that pivot up to form fore and aft end walls as well.

The vehicle seat assembly of the present invention has been shown and described in connection with the rear seat in a passenger sedan. It will be appreciated that the invention can be adapted for use in other vehicle body styles as well.

The seat cushion portions have been illustrated as pivoting forwardly and upwardly about an axis at the front of the seat cushion to the storage position. It will be appreciated however, that the seat cushion can also be mounted on linkages such that the seat cushion need not move solely by rotation about a fixed axis. In addition, the seat cushion can be moved to other storage positions. For example, the seat cushion could rotate upwardly and rearwardly to an upright position adjacent to the seat back, if desired. Other folding arrangements can be utilized as well. For example, two outboard seat cushion portions could rotate inwardly and upwardly about a longitudinal axis to a storage position above the center portion of the seat cushion. While the seat cushion is shown in three separate portions, the seat cushion could have one or two moving portions or more than three if desired. Additionally, it is possible to have one portion of the seat cushion movable and the remainder fixed in position.

It is to be understood that the invention is not limited to the exact construction illustrated and described above, but that various changes and modifications may be made without departing from the spirit and scope of the invention as defined in the following claims.

## Claims

1. A vehicle seat assembly comprising:
a vehicle body;
a seat cushion mounted to the vehicle body, the seat cushion having a generally horizontal passenger use position in which at least one passenger can be seated upon the seat cushion, the seat cushion being movable to a storage position in which access is provided to the space which is covered by the seat cushion when it is in the passenger use position; and
a horizontal support platform fixed to the vehicle body beneath the seat cushion to support cargo thereon when the seat cushion is in the storage position.

2. The vehicle seat assembly of claim 1 wherein the seat cushion has multiple portions which are each independently movable between passenger use positions and storage positions.

3. The vehicle seat assembly of claim 2 wherein the multiple portions of the seat cushion include left and right side portions and a center portion therebetween.

4. The vehicle seat assembly of claim 3 wherein the center portion of the seat cushion is approximately one half the width of the left and right side portions of the seat cushion.

5. The vehicle seat assembly of claim 1 wherein the seat cushion has fixed left and right side bolsters outboard of the movable portion of the seat cushion.

6. The vehicle seat assembly of claim 1 wherein the seat cushion is adapted to be mounted to a vehicle body for rotation about a fixed pivot.

7. The vehicle seat assembly of claim 6 wherein the fixed pivot is adjacent to a front end of the seat cushion.

8. The vehicle seat assembly of claim 1 wherein the seat cushion storage position is a vertically raised position.

9. The vehicle seat assembly of claim 1 wherein the seat cushion is forwardly raised to a generally vertical orientation in the storage position with a rear end of the seat cushion above a forward end of the seat cushion.

10. The vehicle seat assembly of claim 9 further comprising at least one hook on a bottom surface of the seat cushion which, when the seat cushion is in the storage position, is open from above.

11. The vehicle seat assembly of claim 1 further comprising at least one hook on a bottom surface of the seat cushion which, when the seat cushion is in the storage position, is open from above.

12. The vehicle seat assembly of claim 1 further comprising a seat back having a generally upright passenger use position and which is movable to a storage position, the seat cushion having a ledge on a bottom side of the seat cushion forming a generally horizontal support surface for supporting an upper end of the seat back when the seat cushion and seat back are in their respective storage positions.

13. The vehicle seat assembly of claim 12 further comprising fixed side bolsters at the outboard sides of the seat back.

14. The vehicle seat assembly of claim 12 further comprising a fixed collar at an upper end of the seat back adapted to be mounted to a vehicle body.

15. The vehicle seat assembly of claim 12 wherein the seat back has multiple portions each of which are separately movable between use and storage positions.

16. The vehicle seat assembly of claim 1 wherein the horizontal support platform beneath the seat cushion includes a cargo management device which forms a generally horizontal panel beneath the seat cushion and which includes means for retaining cargo in place thereon during vehicle transit.

17. The vehicle seat assembly of claim 16 wherein means for retaining cargo in place includes walls that can be deployed to vertical positions to segment the panel into smaller portions and retain cargo on each portion.

18. A vehicle seat assembly comprising:
a seat cushion having a generally horizontal passenger use position in which at least one passenger can be seated upon the seat cushion, the seat cushion being movable to a storage position in which access is provided to the space which is covered by the seat cushion when it is in the passenger use position;
means forming a horizontal support platform beneath the seat cushion for supporting cargo thereon when the seat cushion is in the storage position; and
at least one hook located on a bottom surface of the seat cushion which, when the seat cushion is in the storage position, is open from above.

19. A vehicle seat assembly comprising:
a seat cushion having a generally horizontal passenger use position in which at least one passenger can be seated upon the seat cushion, the seat cushion being movable to a storage position in which access is provided to the space which is covered by the seat cushion when it is in the passenger use position;
means forming a horizontal support platform beneath the seat cushion for supporting cargo thereon when the seat cushion is in the storage position; and
a seat back having a generally upright passenger use position which is movable to a storage position, the seat cushion having a ledge on a bottom side of the seat cushion forming a generally horizontal support surface for supporting an upper end of the seat back when the seat cushion and seat back are in their respective storage positions.

20. A vehicle seat assembly comprising:
a seat cushion having a generally horizontal passenger use position in which at least one passenger can be seated upon the seat cushion, the seat cushion being movable to a storage position in which access is provided to the space which is covered by the seat cushion when it is in the passenger use position; and
means forming a horizontal support stage beneath the seat cushion for supporting cargo thereon when the seat cushion is in the storage position, said means including a cargo management device which forms a generally horizontal platform beneath the seat cushion and which includes means for retaining cargo in place thereon during vehicle transit, wherein said means for retaining cargo in place includes a substantially horizontal panel that can be pivoted to a substantially vertical position, thereby segmenting the seat cushion space into one or more smaller portions.

21. The vehicle seat assembly of claim 19 wherein the movement of the seatback to the storage position opens a passage to an area of the vehicle behind the seat back.

22. The vehicle seat assembly of claim 12 wherein the movement of the seatback to the storage position opens a passage to an area of the vehicle behind the seat back.
